## Europäisches Patentamt
## European Patent Office
## Office européen des brevets

(11) Veröffentlichungsnummer: **0 101 911**
A2

# EUROPÄISCHE PATENTANMELDUNG

(21) Anmeldenummer: 83107230.1

(22) Anmeldetag: 22.07.83

(51) Int. Cl.³: **C 04 B 35/68**
**C 04 B 35/18, F 01 N 7/14**

(30) Priorität: 05.08.82 DE 3229271

(43) Veröffentlichungstag der Anmeldung:
07.03.84 Patentblatt 84/10

(84) Benannte Vertragsstaaten:
AT DE FR GB IT NL SE

(71) Anmelder: SIEMENS AKTIENGESELLSCHAFT
Berlin und München Wittelsbacherplatz 2
D-8000 München 2(DE)

(72) Erfinder: Singer, Emil, Dr.
Neubaustrasse 2
D-8627 Redwitz(DE)

(72) Erfinder: Stoephasius, Rainer
Mainweg 1
D-8621 Altenkunstadt(DE)

(54) Temperaturschockbeständige keramische Auskleidungen.

(57) Temperaturschockbeständige keramische Auskleidung, insbesondere für Auspuffkrümmer in Autos, aus einer Lithium-Aluminium-Silikat-Keramik, insbesondere einer solchen mit einer Wärmedehnung $< 1 \cdot 10^{-6} K^{-1}$ mit Ton oder Kaolin als plastische Komponente.

EP 0 101 911 A2

SIEMENS AKTIENGESELLSCHAFT          Unser Zeichen
Berlin und München                  VPA 82 P 3 2 3 6 E

Temperaturschockbeständige keramische Auskleidungen

Die Erfindung betrifft temperaturschockbeständige keramische Auskleidungen, insbesondere keramische Auskleidungen für Auspuffkrümmer in Verbrennungsmotoren.

Auspuffkrümmer bestehen zur Zeit üblicherweise aus Grauguß. Diese Teile werden thermisch neben den Auslaßventilen am stärksten beansprucht. Deshalb sind weltweit
Versuche im Gange, Keramikeinsätze zu verwenden, die mit
Aluminium ummantelt sind. Die keramische Auskleidung
dient zur Wärmeisolierung bei sehr guter thermischer Belastbarkeit und bewirkt gleichzeitig auch gegenüber den
bisherigen Metallkonstruktionen aus Grauguß eine Geräuschverminderung.

Bei bekannten keramischen Metallverbundkörpern, insbesondere Abgassträngen mit einem doppelwandigen Aufbau,
kann der eine Teil aus Metall z.B. Aluminium und der
andere aus Keramik bestehen (DE-AS 2 163 717 und
DE-AS 2 354 254).

Bei einer bekannten wärmeisolierten Anordnung zur Durchleitung von unter hohen Temperaturen stehenden Gasen,
insbesondere der Abgase von Brennkraftmaschinen, mit
einem aus einem keramischen Material bestehenden Kern
und einem um diesen gegossenen Metallmantel besteht
der keramische Kern zumindest teilweise aus einem
Silikat-Fasermaterial (DE-OS 2 549 256). Gemäß einer

Td 2. Gr / 2.8.1982

weiteren bekannten Ausführung kann zur Herstellung von Metall-Keramik-Verbundkörpern, insbesondere Zylinderkopf-Abgassträngen und Abgassammelleitungen, silikathaltiges Aluminiumtitanat verwendet werden (DE-AS 2 750 290). Solche Werkstoffe befriedigen für die angesprochene Verwendung, insbesondere für die Auskleidung von Auspuffkrümmern noch nicht. Der Werkstoff Aluminiumtitanat hat zwischen 300 und 600 °C eine Unstetigkeit in der Wärmedehnung bei einem linearen Ausdehnungskoeffizient von $1,5 \cdot 10^{-6} \, K^{-1}$ und höher. Dies wirkt sich vor allem nachteilig auf die Temperaturwechselbeständigkeit aus. Es können daher leicht Risse in solchen keramischen Werkstoffen auftreten.

Aufgabe der Erfindung ist es, einen keramischen Werkstoff zu finden, der sich durch Schlickergießen verarbeiten läßt. Die Resistenz gegen Chemikalien, insbesondere aggressive Gase und Abgase sowie die mechanische Festigkeit, sollen gut sein.

Die Aufgabe wird erfindungsgemäß mit einer Keramik gelöst, die neben plastischem Rohstoff Lithium-Aluminium-Silikat enthält. Mit besonderem Vorteil wird ein Lithium-Aluminium-Silikat mit einer Wärmedehnung $< 1 \cdot 10^{-6} \, K^{-1}$ eingesetzt. Ein Versatz, bestehend aus 35 Gew.-% plastischem Rohstoff und 65 Gew.-% eines Lithium-Aluminium-Silikats, ist besonders leicht vergießbar und derart erhaltene Auskleidungen weisen neben einer guten Haftfestigkeit eine hohe mechanische Festigkeit auf.

Die Wärmedehnung des erfindungsgemäß eingesetzten Lithium-Aluminium-Silikat ist sehr niedrig und die verwendeten plastischen Rohstoffe führen zu besonders guten

- 3 -          VPA   82 P 3 2 3 6 E

Gießeigenschaften. Ein ganz wesentlicher Vorteil der erfindungsgemäßen Keramikmassen besteht insbesondere in einem breiten Sinterintervall von ca. 50 °C. Durch einen relativ hohen Anteil an plastischen Rohstoffen kann einerseits die Gießeigenschaft verbessert werden und andererseits eine gute Rohfestigkeit erzielt werden.

Geeignete plastische Rohstoffe sind Kaoline und Tone, insbesondere ein frühsinternder Ton.

Ein besonders geeigneter Lithium-Rohstoff ist Petalit der chemischen Zusammensetzung $Li_2OxAl_2O_3 \cdot 8SiO_2$.

Die erfindungsgemäßen Massen eignen sich ganz allgemein für die Herstellung von Metall- insbesondere Aluminium-Keramik-Verbundkörper. Solche Verbundkörper sind besonders beständig gegen Temperaturschock, so daß sie mit besonderem Vorteil als Auskleidungen von Aluminiumteilen in Auspuffrohren und Auspuffkrümmern von beispielsweise Automobilen eingesetzt werden.

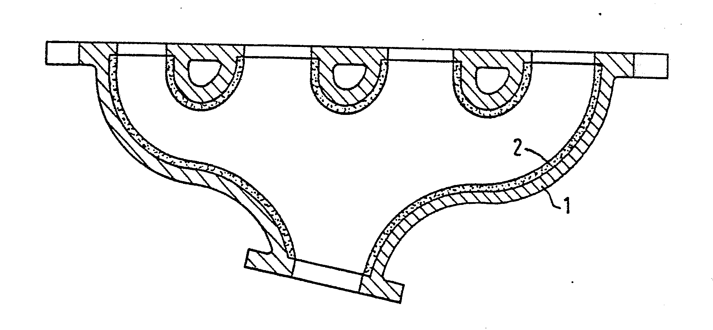

Die Erfindung wird anhand des Beispiels und der Zeichnung näher erläutert.

Beispiel

Versatz 65 Gew.-% Lithium-Feldspat-Mehl (Petalit)
        32 Gew.-% Kaolin
         3 Gew.-% Ton.

Der Petalit enthält ca. 4 Gew.-% Lithiumoxid, das entspricht etwa 83 Gew.-% Lithium-Feldspat.

Der Gießschlicker wird nach Art einer Porzellangießmasse aufbereitet. Eine Mahlung entfällt, da die Hauptstoffe vorzerkleinert sind.

Zur Verflüssigung werden 35 Gew.-% Wasser, 0,06 Gew.-% Soda, 0,065 Gew.-% Natrium-Wasserglas und 0,15 Gew.-% Dolapix-PCN$^{®}$

(Verflüssigungsmittel
wie synthetischer
Polyelektrolyt.)

zugegeben.

Die Masse wird, wie in der Keramik üblich, in Gipsformen gegossen. Für Trocknung und Brennen werden
Bomsen und Stützel verwendet. Der erhaltene Formkörper
kann sowohl in oxidierender als auch in reduzierender
bzw. neutraler Atmosphäre gesintert werden. Die Aufheizungsgeschwindigkeit beträgt 50 bis 100 °C. Die
maximale Sintertemperatur liegt zwischen 1260 bis
1330 °C.

Der erhaltene keramische Formling kann nun mit einem
geeigneten Metall, beispielsweise Aluminium, ummantelt
werden.

Ein solches mit einem äußeren Metallmantel, insbesondere
einer Aluminiumumkleidung, versehenes Auspuffrohr zeigt
beim Passieren von heißen und aggressiven Gasen, beispielsweise Abgasen, keine chemische Veränderung.

Die Figur zeigt einen Auspuffkrümmer im Schnitt. Mit 1
ist der Metallmantel bezeichnet und mit 2 die Keramikauskleidung gemäß der Erfindung. Sie hat in dem vorliegenden Fall eine Stärke von ca. 3 mm.

4 Patentansprüche

1 Figur

- 5 -        VPA 82 P 3 2 3 6 E

<u>Patentansprüche</u>

1. Temperaturschockbeständige keramische Auskleidungen,
insbesondere keramische Auskleidung für Auspuffkrümmer
in Verbrennungsmotoren, d a d u r c h   g e k e n n -
z e i c h n e t ,  daß die Keramik neben plastischem
Rohstoff Lithium-Aluminium-Silikat enthält.

2. Temperaturschockbeständige keramische Auskleidung
nach Anspruch 1, d a d u r c h   g e k e n n z e i c h -
n e t ,  daß das Lithium-Aluminium-Silikat eine Wärmedehnung $< 1 \cdot 10^{-6} \ K^{-1}$ hat.

3. Keramik zur Herstellung von temperaturschockbeständigen Auskleidungen nach Anspruch 1, bestehend aus
35 Gew.-% plastischem Rohstoff wie Ton und Kaolin und
65 Gew.-% Lithium-Aluminium-Silikat.

4. Keramik nach Anspruch 3, d a d u r c h   g e -
k e n n z e i c h n e t ,  daß als Lithium-Aluminium-
Silikat Petalit der chemischen Zusammensetzung
$Li_2O \cdot Al_2O_3 \cdot 8SiO_2$ verwendet ist.